# EUROPEAN PATENT APPLICATION

(11) **EP 4 354 830 A1**
(43) Date of publication of application: **17.04.2024**
(21) Application number: 22382970.6
(22) Date of filing: 13.10.2022
(51) Int. Cl.: H04L 65/1069, H04L 65/1104

(54) **MANAGEMENT OF SIP INVITE MESSAGES IN A CELLULAR NETWORK**

(71) Applicant: Vodafone Group Services Limited, Newbury RG14 2FN (GB); Vodafone España, S.A.U., 28042 Madrid (ES)
(72) Inventor: DOMÍNGUEZ GONZÁLEZ, Rafael, London, W2 6BY (GB); MARTÍNEZ PEREA, Rogelio, London, W2 6BY (GB); MUÑOZ SERRANO, Veronica, London, W2 6BY (GB)
(74) Representative: Boult Wade Tennant LLP

(57) **Abstract**

Management of Session Initiation Protocol (SIP) INVITE messages may be achieved in a cellular network. A delayed offer SIP INVITE message from a calling party to a called party via the cellular network is detected at the cellular network. An early offer SIP INVITE message based on the received delayed offer SIP INVITE message is communicated from a network entity of the cellular network to the called party. The communicated early offer SIP INVITE message thereby allows set up of a call between the calling party and the called party.

## Description

### Technical Field of the Disclosure

The disclosure concerns management of Session Initiation Protocol (SIP) INVITE messages in a cellular network, specifically at at least one network entity (for example, an application server).

### Background to the Disclosure

Early cellular networks provided connection-based services, for example calls, separately from data services that are typically packet-based. The development of Long Term Evolution (LTE) included packet-based approaches for providing connection-based services, including those based on Internet Protocol (IP), for example using a IP Multimedia Subsystem (IMS) and Voice over LTE (VoLTE) technologies. These allow the use of Voice over IP (VoIP) protocols, including Session Initiation Protocol (SIP). VoIP protocols were not designed for operation with cellular networks and although cellular network architectures are increasingly configured for IP operation, difficulties can still arise, especially in view of the uptake of VoLTE deployment around the world.

One particular issue concerns the lack of a standardised way for dealing with SIP endpoints. These are often not globally compatible and such heterogeneous implementations make network rationalisation and optimization difficult.

For example, a Private branch exchange (PBX) integration may try to communicate with a VoLTE counterpart on the same network. Commonly, a PBX initiates a SIP dialog (with an INVITE message) using a delayed offer, versus the more traditional early (initial) offer. With Early Offer (EO), the session initiator (calling party or device) sends capabilities (for instance codec, IP address, and UDP port for Real Time Transport Protocol, RTP) in the Session Description Protocol (SDP) message body contained in the initial INVITE message. This allows the called party or device to choose the properties and/or capabilities of the call. EO is often preferred by a IP Public Switched Telephone Network (PSTN) provider, because it allows quick establishment of one-way media to the calling device, after reception of the initial INVITE message. For example, the provider may stream messages, which may include "unknown number" or an indication of a cost for calling the number. With an EO INVITE, the called device decides the negotiated media.

For a Delayed Offer INVITE message, the session initiator (calling party or device) does not send its capabilities in the initial INVITE message, but waits for the calling party or device to send its capabilities first. There is therefore no SDP message body with a Delayed Offer INVITE message. Using this method means that the called party or device will typically send its capabilities first (for instance, a list of codecs it can handle), thus allowing the calling party or device to choose from that list. Section 13.2.1 of RFC3261 defines that "The initial offer MUST be in either an INVITE or, if not there, in the first reliable non-failure message from the UAS back to the UAC. In this specification, that is the final 2xx response." Late or delayed offer represents the second case, where the INVITE sent at first does not carry the initial offer.

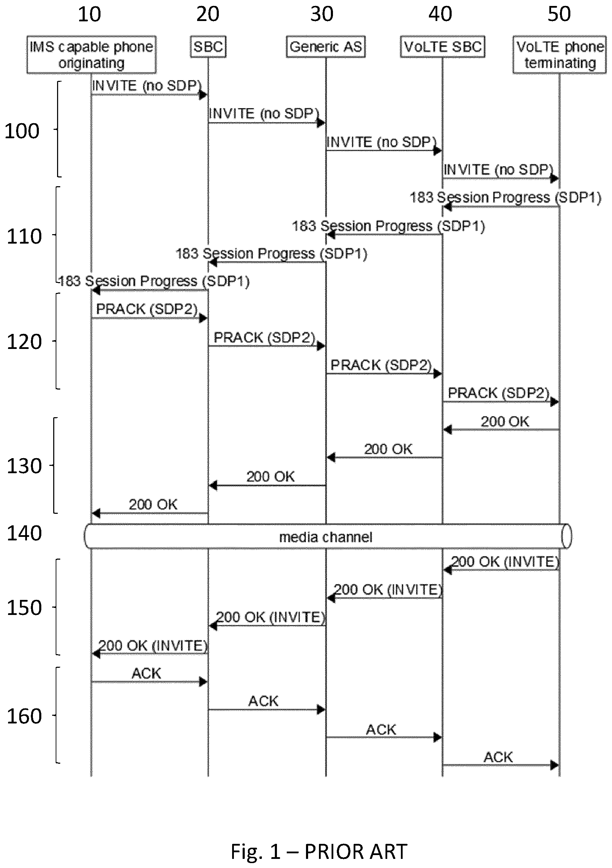

Reference is now made to Figure 1, in which there is shown an example message flow for an existing SIP call initiation process with a delayed offer INVITE message. The entities shown in this schematic diagram include: an originating SIP (IMS capable) phone (calling party) 10; a Session Border Controller (SBC) 20; a generic application server (AS) 30; a VoLTE SBC 40 within the cellular network; and a VoLTE-capable phone 50, which is the terminating or called party. All the dialogs are simplified and not all relevant network nodes or entities are depicted, such as the Call Session Control Function (CSCF).

The SIP flow begins with a SIP invite message 100, which in this case is a delayed offer message without SDP content. This message originates at the calling party 10 and is passed through the SBC 20, AS 30, VoLTE SBC 40 to the called party 50. The called party 50 returns a 183 session progress message 110 with a proposed SDP configuration (SDP1) through the same path to the calling party 10. The calling party 10 responds with a PRACK message with associated SDP configuration (SDP2) through the same path. This receives a 200 OK response 130 from the called party 50. A media channel 140 is then established. A further 200 OK message 150 is then communicated from the called party 50 to the calling party 10 when there is to be media flow and this receive a ACK message acknowledgement 160 from the calling party 10 to the called party 50.

Typically, in a normal call flow, upon an initial VoLTE registration, the SBC 40 will establish a receive (Rx) session with the Policy and Charging Rules Function (PCRF), in order to be notified of status changes of the radio bearer. One objective is to grant the SBC 40 the ability to reject immediately any call if the user does not have a valid context, causing it to be routed to a valid technology (for example, 3G or 2G). With a delayed offer SIP INVITE message, the SBC 40 cannot take this action without a large amount of additional signalling. Delayed offer SIP INVITE messages thus present challenges to the efficient and effective operation within a cellular network.

### Summary of the Disclosure

Against this background, there is provided a method for management of Session Initiation Protocol (SIP) INVITE messages in a cellular network according to claim 1, a computer program in line with claim 14 and a system of one or more network entities (for example, one, some or each being an application server or AS) in accordance with claim 15.

In particular, at least one entity or node within the cellular network (typically, a AS) detects a delayed offer SIP INVITE message (having no Session Description Protocol, SDP, content) and converts it to an early offer SIP INVITE message (with SDP content) for sending to the called party, which may be a network subscriber (or more generally, a SIP endpoint). In this way, a call may be set up between the calling party and the called party (via the cellular network)in a more optimal way. The approach may be implemented in software and/or hardware. Communications between the AS and the calling party and/or called party are typically via respective a Session Border Controller (SBC). Although the approach described herein refers to a single AS, it will be understood that the functionality can be divided between multiple Application Servers in a cellular network.

The early offer SIP INVITE message includes SDP content to allow the called party to set up a media flow (for instance based on Real Time Transport Protocol, RTP) or at least a media control flow (for example, based on RTP Control Protocol, RTCP). For example, the SDP content may comprise a media endpoint other than the calling party.

In some embodiments, the endpoint is a Media Resource Function (MRF). A MRF is typically used for real time IP media processing functions, including media streaming and recording. In the present disclosure, the MRF can be used to provide a temporary media flow or at least media control flow with one of the parties, typically the called party, or both of the parties. This may be achieved by the AS sending the received delayed offer SIP INVITE message to the MRF, which then returns SDP content, which can be used to provide the SDP content for the early offer SIP INVITE message to the called party. In particular implementations, the AS may send the received delayed offer SIP INVITE message to the MRF a second time and may receive from the MRF a second SDP configuration. Then, the AS can send a SIP session progress message to the calling party based on the second SDP configuration. This may allow the calling party to set up media flow (at least media control flow) with the MRF.

In alternative embodiments, the endpoint in the early offer SIP INVITE message is non-existent. Then, the SDP content is beneficially further configured to prevent a timeout. For example, it may include a bandwidth indicator set as zero (for instance, a RR and/or RS parameter).

As part of the SIP call initiation process, especially when the calling party is not intended to be provided with any temporary medial flow or media control flow, the AS may send a SIP session progress message without a SDP message to the calling party. In particular, the SIP session progress message beneficially indicates no 100rel support.

In a final part of the SIP call initiation process, a first SIP request success (200 OK) message may be received at the AS from the called party (indicating that the called party has content for media flow to the calling party) and in response, the AS may communicate a SIP re-negotiation message (for example, a RE-INVITE or UPDATE message) to the called party, which advantageously does not include a SDP message. Then, a second SIP request success (200 OK) message be communicated from the called party to the AS, comprising a SDP configuration. The AS may then communicate the second SIP request success message with the SDP configuration to the calling party. A SIP ACK message with a further SDP message may then be received at the AS from the calling party. In response, the AS communicates the SIP ACK message with the further SDP message to the called party. A media channel can thereby be set up between the calling party and the called party.

### Brief Description of the Drawings

The disclosure may be put into practice in a number of ways and preferred embodiments will now be described by way of example only and with reference to the accompanying drawings, in which:
Figure 1 shows an example message flow for an existing SIP call initiation process with a delayed offer INVITE message;
Figure 2 depicts a message flow for a SIP call initiation process with a delayed offer INVITE message according to a first embodiment;
Figure 3 illustrates a message flow for a SIP call initiation process with a delayed offer INVITE message according to a second embodiment; and
Figure 4 shows a message flow for a SIP call initiation process with a delayed offer INVITE message according to a third embodiment.

### Detailed Description of Preferred Embodiments

The present disclosure describes a number of aspects, each of which can be considered individually. The combination of these aspects (or even just the combination of one more features from one aspect with another aspect) is also provided.

It has been found that the lack of an initial SDP in a delayed offer SIP INVITE message can impact other optimization in the network and the resource reservation on the terminating or called party. For example, an optimization of the receive (Rx) interface is advantageous to reduce the load and the required capacity in both the SBC and PCRF.

One way to reduce the load on this interface is to eliminate the Rx session when it is not needed, for example, because it is not related to ongoing calls. The impact of this change may be low, as normally a terminating call creates a Rx session anyway, so the introduced delay can be neglected. This happens for every SIP INVITE with SDP (early offer), as the SBC needs to create the Rx session at this point. For an INVITE without SDP (delayed offer), the Rx session is created with the first reliable response, so it may be required for this call to timeout in order to properly route. This should be avoided for several reasons: an increase on the amount of errors on the network; a noticeable increase on the call setup time; and worse user experience in general.

Rather, an approach according to the disclosure is proposed to transform dialogs based on a delayed offer SIP INVITE message into dialogs more similar to an initial or early offer. This may be achieved using an Application Server (AS) within the cellular network, which may be a generic AS. The AS may receive (intercept) the SIP INVITE message from the calling party and detect that it is a delayed offer message. The AS then sends the SIP INVITE message on to the called party with a SDP content, thereby making it an early offer SIP INVITE message. The endpoint indicated in the SDP content is advantageously different from the calling party, in order to create a temporary scenario in which at least the called party (and optionally also the calling party) is configured with a SDP endpoint for media or control data flow. As will be explained below, some embodiments may implement the SDP endpoint with a real address to provide a temporary flow, but this might not be necessary and the SDP endpoint could be a false address.

Three specific options are considered in practice. In a first approach, the AS provides SIP signalling adaptations and uses a Media Resource Function (MRF) to provide media capabilities to the originating and terminating party. A second approach also provides SIP signalling adaptations at the AS and uses the MRF to provide media capabilities to the terminating party (but not the originating or calling party). In a third approach, the AS provides SIP signalling adaptations without using a MRF. These approaches will be described in more detail below.

In a general sense, there may be considered a method for management of SIP INVITE messages in a cellular network. The method comprises: detecting, for example at a network entity of the cellular network (for example, a AS), a delayed offer SIP INVITE message via the cellular network from a calling party to a called party (for example, a subscriber of the cellular network or another SIP endpoint that may be reached via a subscriber); and communicating from a network entity of the cellular network (which may be the same network entity that detected the SIP INVITE message or another network entity) to the called party, an early offer SIP INVITE message based on the received delayed offer SIP INVITE message. In particular, the communicated early offer SIP INVITE message thereby allows set up of a call between the calling party and the called party. In the general sense below, the term network entity refers to the network entity or node that communicates to the called party (which may be the same network entity or node that detected the SIP INVITE message or it could be different.

In alternative aspects, there may be considered a computer program (for example on a computer readable medium, which may be non-transitory), configured when executed by a processor to perform any method described herein. Further alternative aspects may include a network entity of a cellular network (for example, an application server) or a system of network entities (for instance based on one network entity or multiple network entities of the cellular network) for managing SIP INVITE messages and being configured to operate according to any method herein described.

A number of optional and/or advantageous features may be considered. For example, the early offer SIP INVITE message may comprise a Session Description Protocol (SDP) message with an endpoint other than the calling party. Communication between the network entity and the called party is preferably via a Session Border Controller (SBC) of the cellular network. Additionally or alternatively, communication between the network entity and the calling party is via a further SBC.

In some embodiments, the endpoint is a MRF of the cellular network. The endpoint may be just for one party, for example the called party, or it may be for both the calling party and the called party. In so doing, a media flow (for instance, using Real Time Transport Protocol, RTP) or a media control flow (using RTP Control Protocol, RTCP) may be configured.

Further reference to the general senses of the disclosure will be made again below. First, specific embodiments are described in more detail.

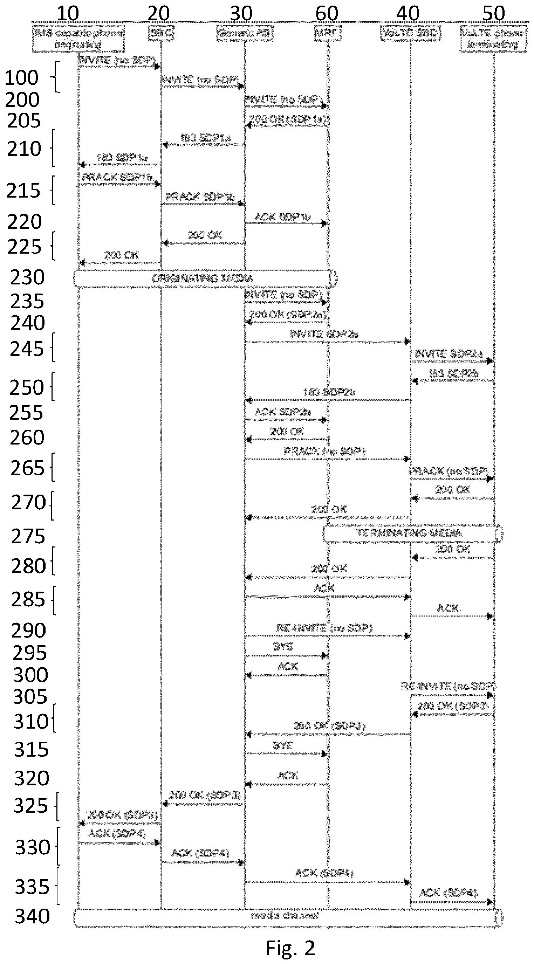

Referring to Figure 2, there is depicted a message flow for a SIP call initiation process with a delayed offer INVITE message according to a first embodiment (the first approach mentioned above). Where the same entities (and messages) are shown as depicted in Figure 1, identical reference numerals have been employed. In addition to the entities shown in Figure 1, there is also shown a MRF 60.

In this first scenario, the AS 30 detects when the received SIP INVITE does not contain a SDP configuration. This triggers the AS 30, before sending the SIP INVITE in order to progress the call, to start two third party call controls with the MRF 60. The intention (and end result) is to have separate media sessions from the MRF 60 with each of both the originating and terminating parties. The MRF has these two sessions during the whole early phase of the call. This will now be explained in more detail.

The SIP flow begins with a SIP invite message 100, which as above, is a delayed offer message without SDP content and is detected as a delayed offer message at the AS 30. The AS 30 then sends the SIP invite message without SDP 200 to the MRF 60. The MRF 60 replies to the AS 30 with a 200 OK message 205 with a first SDP configuration (SDP1a). The AS 30 sends a 183 session progress message 210 to the calling party 10 (via the SBC 20) with the first SDP configuration. The calling party 10 replies to the AS 30 (via the SBC 20) with a PRACK message with a second SDP configuration (SDP1b). The AS 30 sends the second SDP configuration to the MRF 60 with a ACK message 220 and replies to the calling party 10 with a 200 OK message 225. In so doing, a first (originating) media flow 230 is set up between the calling party 10 and the MRF 60.

The AS 30 then sends the SIP invite message without SDP 235 to the MRF 60 a second time. The MRF 60 replies to the AS 30 with a 200 OK message 240 with a third SDP configuration (SDP2a). The AS 30 next sends a SIP INVITE message 245 to the called party 50 (via the VoLTE SBC 40) with the third SDP configuration. The called party 50 replies to the AS 30 (via the VoLTE SBC 40) with a 183 session progress message 250 with a fourth SDP configuration (SDP2b). The AS 30 sends the fourth SDP configuration to the MRF 60 with a ACK message 255 and the MRF 60 replies to the AS 30 with a 200 OK message 260. The AS 30 then sends a PRACK message with no SDP configuration 265 to the called party 50 and the called party 50 replies to the AS 30 with a 200 OK message 270. In so doing, a second (terminating) media flow 275 is set up between the MRF 60 and the called party 50.

As a result, both the calling party 10 and the called party 50 now have separate media flows with the same MRF 60. This allows the opportunity for optimal configuration of the network, despite the lack of configuration information from the calling party 10 due to the delayed offer SIP INVITE message that was originally sent.

When the called party 50 has media to send, it transmits a 200 OK message 280, which is received at the AS 30. The AS 30 replies with a ACK message 285. The AS 30 also sends a SIP RE-INVITE message 290 with no SDP configuration, which is received at the VoLTE SBC 40. A BYE message 295 is sent from the AS 30 to the MRF 60 and the MRF 60 replies to the AS 30 with a ACK message 300. This terminates the second media flow 275. The VoLTE SBC 40 sends the SIP RE-INVITE message with no SBC configuration 305 to the called party 50, which responds with a 200 OK message 310 with a fifth SDP configuration (SDP3). The AS 30 sends a BYE message 315 to the MRF 60 and the MRF 60 replies to the AS 30 with a ACK message 320. This terminates the first media flow 230. The AS 30 then sends a 200 OK message 325 with the fifth SDP configuration (SDP3) to the calling party 10 (via the SBC 20) and the calling party 10 replies to the AS 30 with a ACK message with a sixth SDP configuration (SDP4) 330. The AS 30 sends on the ACK message with the sixth SDP configuration 335 to the called party 50. In so doing, a media channel 340 is set up between the calling party 10 and the called party 50 to allow the call to commence fully.

This approach works well with existing network architectures and configurations. However, use of the MRF 60 may not be ideal, due to its resource cost. Thus, other approaches using the MRF 60 less or not at all can also be considered.

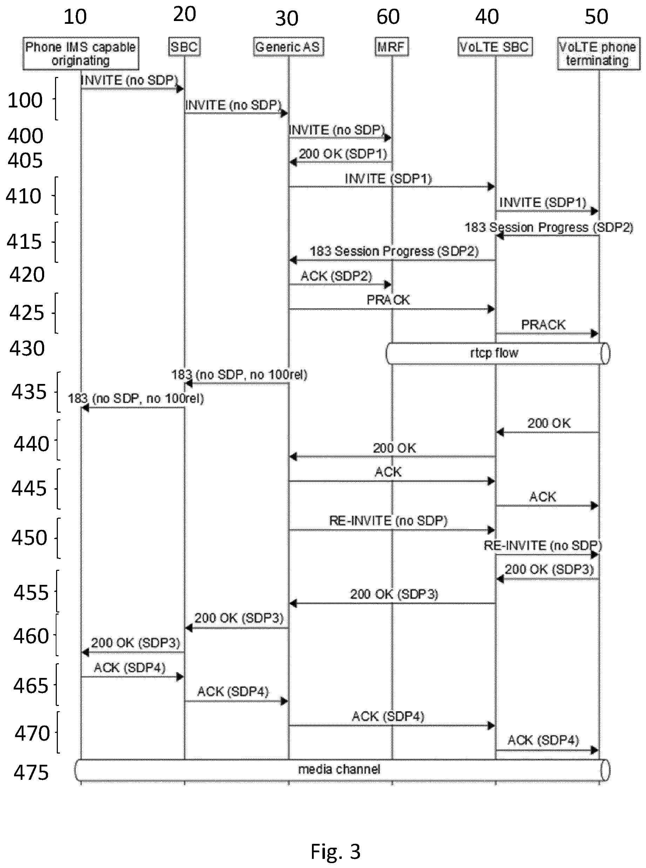

Referring next to Figure 3, there is illustrated a message flow for a SIP call initiation process with a delayed offer INVITE message according to a second embodiment (the second approach mentioned above). As before, the same entities (and messages) as shown in earlier drawings are indicated with identical reference numerals. This approach is similar to the first approach (shown in Figure 2), but using the MRF 60 only to set up an initial media flow with the terminating leg (called party 50). In so doing, it tries to reduce the usage of media channels that require the MRF 60.

Essentially, the AS 30 detects when the received SIP INVITE does not contain an SDP (that is, it is a delayed offer message). Before sending the SIP INVITE to the called party 50 to progress the call, it starts a third-party call control with the MRF 60. This intends to provide a media session for the terminating party (called party 50). The media session includes the header "P-Early-Media" supported even if the original SIP INVITE does not include this header. This will now be described in more detail.

The SIP flow begins with a SIP invite message 100, which as above, is a delayed offer message without SDP content and is detected as a delayed offer message at the AS 30. The AS 30 then sends the SIP invite message without SDP 400 to the MRF 60. The MRF 60 replies to the AS 30 with a 200 OK message 405 with a first SDP configuration (SDP1). The AS 30 next sends a SIP INVITE message 410 to the called party 50 (via the VoLTE SBC 40) with the first SDP configuration (SDP1). The called party 50 replies to the AS 30 (via the VoLTE SBC 40) with a 183 session progress message 415 with a second SDP configuration (SDP2). The AS 30 sends the second SDP configuration to the MRF 60 with a ACK message 420. The AS 30 then sends a PRACK message to the called party 50. In so doing, a Real Time Transport Protocol (RTP) Control Protocol (RTCP) flow (a media control flow) 430 is set up between the MRF 60 and the called party 50.

The AS 30 ignores SIP 1xx message received non reliably with SDP from the called party 50, unless they contain an announcement (P-Early-Media sendonly). The exception to this is a 180 message, that will be progressed normally, removing the SDP. If the non-reliable 1xx message does not have an SDP configuration, it can be safely sent to the called party 10.

The AS 30 sends a 183 session progress message 435 to the calling party 10 (via the SBC 20) with no SDP configuration. Thus, after the AS 30 closes the media negotiation with the MRF 60, it notifies the calling party 10 with the 183 message 435 sent unreliably and with no SDP. The 183 session progress message 435 also indicates "no 100rel", so that 100rel support is not enabled. This may prevent the calling party 10 from dropping the call before it can be fully initiated.

When the called party 50 has media to send, it transmits a 200 OK message 440, which is received at the AS 30. The AS 30 replies with a ACK message 445. The AS 30 sends a SIP RE-INVITE message 450 with no SDP configuration to the called party 50 (via the VoLTE SBC 40). The called party 50 responds to the AS 30 with a 200 OK message 455 with a third SDP configuration (SDP3). Hence upon the reception of the 200 OK message 440 to the SIP INVITE message 410, the AS 30 closes the media channel 430 with the MRF 60 and issues an INVITE without SDP on the established session with the called party 50 in order to get the full list of supported codecs. Then, this can be used to negotiate the final media session with the called party.

The AS 30 sends the 200 OK message 460 with the third SDP configuration (SDP3) to the calling party 10 (via the SBC 20) and the calling party 10 replies to the AS 30 with a ACK message with a fourth SDP configuration (SDP4) 465. The AS 30 sends on the ACK message with the fourth SDP configuration 470 to the called party 50. In so doing, a media channel 475 is set up between the calling party 10 and the called party 50 to allow the call to commence fully.

Reference is made to the general sense of the disclosure discussed above. Further optional and/or advantageous features are now described. For example, in some embodiments, the method may further comprise sending, from the network entity to the MRF, the received delayed offer SIP INVITE message. Then, a SDP message may be received at the network entity from the MRF. The early offer SIP INVITE message communicated from the network entity to the called party is beneficially further based on the SDP message received from the MRF. For instance, the SDP message may include an endpoint identifying the MRF. Advantageously, the early offer SIP INVITE message communicated from the network entity to the called party is configured to set up media flow or media control flow between the MRF and the called party.

Preferably, the method further comprises sending, from the network entity to the MRF, the received delayed offer SIP INVITE message. Then a SDP message may be received at the network entity from the MRF. In consequence, the network entity may send to the calling party, a SIP session progress message based on the SDP message received from the MRF. This may beneficially allow the calling party to set up media flow with the MRF.

In embodiments, the method may further comprise sending, from the network entity to the calling party, a SIP session progress message. In some embodiments (where the MRF is only being used with the called party), the SIP session progress message does not include a SDP message. In particular, the SIP session progress message optionally indicates no 100rel support. This may allow the calling party to continue the SIP call initiation without problems.

Embodiments of the method may further comprise, in response to receiving a first SIP request success message at the network entity from the called party, communicating a SIP renegotiation message (for instance, a RE-INVITE message, beneficially without a SDP message) to the called party. This may allow reconfiguration (or renegotiation) of the media with the calling party. For example, a second SIP request success message may be received at the network entity from the called party. The second SIP request success message beneficially comprises a SDP message. Then, the second SIP request success message with the SDP message may be sent from the network entity to the calling party. In response to receiving a SIP ACK message with a further SDP message at the network entity from the calling party, the SIP ACK message with the further SDP message may be communicated from the network entity to the called party, thereby setting up a media channel between the calling party and the called party.

Additional specific embodiments are described below in more detail. Then, further reference to the general senses of the disclosure will be made once more.

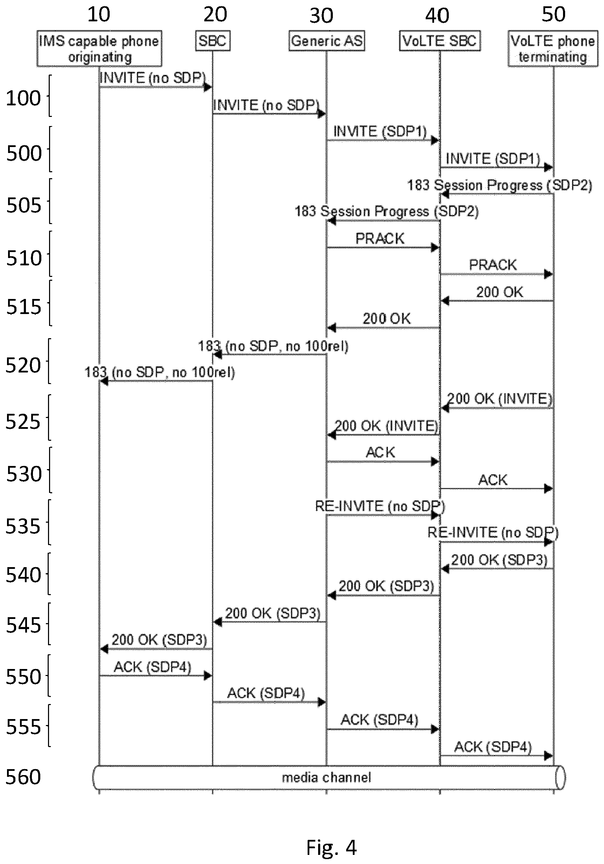

Finally, reference is made to Figure 4, in which there is shown a message flow for a SIP call initiation process with a delayed offer INVITE message according to a third embodiment (the third approach mentioned above). This approach tries to eliminate the usage of the MRF. Again, identical reference numerals indicate the same entities (and messages) as shown in earlier drawings.

The SIP flow begins with a SIP invite message 100, which as before, is a delayed offer message without SDP content and is detected as a delayed offer message at the AS 30. Before sending the SIP INVITE to the called party 50 in order to progress the call, the AS 30 selects a predefined SDP configuration (SDP1). This predefined SDP configuration is desirably compatible with the codecs with fixed rtpmap offered within the cellular network. The session ID and other unique parameters are advantageously randomly generated and beneficially stored to be used later. The endpoint contained in the SDP for media does not exist (it is a fictional endpoint).

Also, the predefined SDP configuration desirably prevents the called party 50 from dropping the call. For example, this can be achieved by setting bandwidth parameters in the SDP configuration, for instance the RR and RS parameters. These parameters are used to control the bandwidth available for sender and receiver reports, so if the available bandwidth is set to zero, the called party 50 should not trigger a RTP or RTCP timeout.

The AS 30 then sends the SIP invite message with the predefined SDP 500 to the calling party 10 (via the SBC 20). Also, even if the original SIP INVITE message does not include the P-early media header and/or 100rel, these are both included on the SIP invite message with the predefined SDP 500 sent to the calling party 10. The calling party 10 replies to the AS 30 (via the SBC 20) with a 183 session progress message 505 with a second SDP configuration (SDP2). The AS 30 sends a PRACK message 510 to the called party 50 in response. The AS 30 ignores any SIP 1xx messages received non reliably with SDP from the called party 50, unless they contain an announcement (P-Early-Media sendonly). The exception to this is any SIP 180 message that will be progressed normally by removing the SDP configuration. If the non-reliable SIP 1xx messages do not have an SDP, they can be safely sent to the calling party 10.

When the called party 50 has media to send, it transmits a 200 OK message 525, which is received at the AS 30. The AS 30 replies with a ACK message 530. The AS 30 sends a SIP RE-INVITE message 535 with no SDP configuration to the called party 50 (via the VoLTE SBC 40). The called party 50 responds to the AS 30 with a 200 OK message 540 with a third SDP configuration (SDP3). This triggers media renegotiation, as happens normally. Specifically, the AS 30 sends the 200 OK message 545 with the third SDP configuration (SDP3) to the calling party 10 (via the SBC 20) and the calling party 10 replies to the AS 30 with a ACK message with a fourth SDP configuration (SDP4) 550. The AS advantageously adapts the fourth SDP configuration (SDP4) into a variant fourth SDP configuration (SDP4'), making sure the version and rest of parameters are aligned between SDP4' and SDP1. The AS 30 sends on the ACK message with the variant fourth SDP configuration 555 to the called party 50. In so doing, a media channel 560 is set up between the calling party 10 and the called party 50 to allow the call to commence fully.

Returning again to the general senses of the disclosure detailed above, other optional and/or advantageous features can be described. For instance, the endpoint (provided to the called party and that is not the calling party) may be non-existent. Then, the SDP message may be further configured to prevent a timeout, for example by including at least one bandwidth indicator (which may include RR and/or RS parameters) as zero.

Although specific embodiments have now been described, the skilled person will appreciate that various modifications and alternations are possible. It will particularly be understood that the disclosure need not be limited to the specific network architectural described and may be implemented in further evolutions of the network architecture, particularly where the same or similar network elements are used (even if their names are different).

The exact configuration of the network entities may differ from that shown in the drawings. For instance, the AS 30 can be on the originating or the terminating services execution. The SBC configuration need not be as shown in the specific embodiments.

As noted elsewhere in the present disclosure, the functionality of the AS 30 described herein may be split between multiple network entities. For example, the AS 30 may act as a detecting node (to identify the delayed offer SIP INVITE message), but another network entity may send the modified SIP INVITE message. In one such implementation, several "detecting" AS entities could each redirect a call to a single AS that applies the modification (for example, this could be modification in a MRF entity). In some embodiments, the MRF 60 could provide some of the functionality disclosed in respect of AS 30, therefore.

An alternative to a SIP RE-INVITE message for renegotiation of the media flow may include a SIP UPDATE message, although any standard SIP media re-negotiation technique may be employed.

The specific steps of communication flows and/or structures of communication elements may be varied without loss of the benefits of the disclosure. Various approaches of the present disclosure may not be limited to SIP call initiation and may be useful for other modes of SIP operation for other types of connection

## Claims

1. A method for management of Session Initiation Protocol, SIP, INVITE messages in a cellular network, the method comprising:
detecting, at the cellular network, a delayed offer SIP INVITE message from a calling party to a called party via the cellular network;
communicating from a network entity of the cellular network to the called party, an early offer SIP INVITE message based on the received delayed offer SIP INVITE message, the communicated early offer SIP INVITE message thereby allowing set up of a call between the calling party and the called party.

2. The method of claim 1, wherein the early offer SIP INVITE message comprises a Session Description Protocol, SDP, message with an endpoint other than the calling party.

3. The method of claim 2, wherein the endpoint is a Media Resource Function, MRF, of the cellular network.

4. The method of claim 3, further comprising:
sending, from the network entity to the MRF, the received delayed offer SIP INVITE message; and
receiving at the network entity from the MRF a SDP message; and
wherein the early offer SIP INVITE message communicated from the network entity to the called party is further based on the SDP message received from the MRF.

5. The method of claim 4, wherein the early offer SIP INVITE message communicated from the network entity to the called party is configured to set up media flow or media control flow between the MRF and the called party .

6. The method of any of claims 3 to 5, further comprising:
sending, from the network entity to the MRF, the received delayed offer SIP INVITE message, receiving a SDP message at the network entity from the MRF and sending, from the network entity to the calling party, a SIP session progress message based on the SDP message received from the MRF, to allow the calling party to set up media flow with the MRF.

7. The method of claim 2, wherein the endpoint is non-existent and the SDP message is further configured to prevent a timeout.

8. The method of claim 8, wherein the SDP message is configured to prevent a timeout by including at least one bandwidth indicator as zero.

9. The method of any of claims 1 to 5, 7 or 8, further comprising:
sending, from the network entity to the calling party, a SIP session progress message without a SDP message.

10. The method of claim 9, wherein the SIP session progress message indicates no 100rel support.

11. The method of any preceding claim, further comprising:
in response to receiving a first SIP request success message at the network entity from the called party, communicating a SIP re-negotiation message to the called party;
receiving a second SIP request success message at the network entity from the called party, the second SIP request success message comprising a SDP message;
sending the second SIP request success message with the SDP message from the network entity to the calling party;
in response to receiving a SIP ACK message with a further SDP message at the network entity from the calling party, communicating the SIP ACK message with the further SDP message from the network entity to the called party, thereby setting up a media channel between the calling party and the called party.

12. The method of any preceding claim, wherein communication between the network entity and the called party is via a Session Border Controller, SBC, of the cellular network.

13. The method of any preceding claim, wherein the network entity of the cellular network is an application server.

14. A computer program, configured when executed by a processor to perform the method of any preceding claim.

15. A system of one or more network entities of a cellular network for managing Session Initiation Protocol, SIP, INVITE messages, the system being configured to operate according to the method of any of claims 1 to 13.
